# EUROPEAN PATENT APPLICATION

(11) **EP 4 579 849 A1**
(43) Date of publication of application: **02.07.2025**
(21) Application number: 22968843.7
(22) Date of filing: 20.12.2022
(51) Int. Cl.: H01M 10/0567, H01M 10/0525

(54) **ELECTROLYTE, ELECTROCHEMICAL DEVICE, AND ELECTRONIC DEVICE**

(71) Applicant: Dongguan Amperex Technology Limited, Dongguan City, Guangdong Province 523000 (CN)
(72) Inventor: XU, Chunrui, Dongguan, Guangdong 523000 (CN); ZHOU, Shaoyun, Dongguan, Guangdong 523000 (CN)
(74) Representative: Icosa
(86) International application number: PCT/CN2022/140311
(87) International publication number: WO 2024/130540

(57) **Abstract**

This application provides an electrolyte, an electrochemical device and an electronic device. The electrolyte includes a compound of Formula I and an additive B, and the additive B includes at least one of LiPF₂O₂, lithium bis(oxalato)borate, lithium difluoro(oxalato) borate, lithium bis(fluorosulfonyl)imide or lithium bis(trifluoromethanesulfonyl)imide.

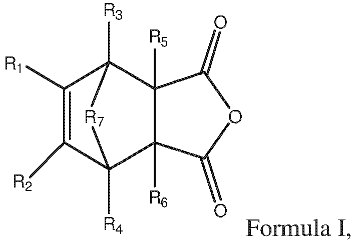

The electrolyte of this application can improve the high-temperature cycle performance, storage performance and safety performance of the electrochemical device.

## Description

### TECHNICAL FIELD

This application relates to the field of electrochemical energy storage, and in particular, to an electrolyte, an electrochemical device and an electronic device.

### BACKGROUND

Currently, electrochemical devices (e.g., lithium-ion batteries) are widely used in the fields such as consumer electronics, electric vehicles, and energy storage devices. With advantages such as high energy density and no memory effect, the lithium-ion batteries have gradually become the mainstream batteries in the above fields. However, the safety and stability of the lithium-ion batteries are challenged under special working conditions, such as high temperature environments. Therefore, how to improve the high-temperature cycle and storage performance as well as the safety performance of the lithium-ion batteries has become an urgent issue for the industry.

### SUMMARY

This application provides an electrolyte, the electrolyte includes a compound of Formula I and an additive B, and the additive B includes at least one of LiPF₂O₂, lithium bis(oxalato)borate (LiBOB), lithium difluoro(oxalato) borate (LiDFOB), lithium bis(fluorosulfonyl)imide (LiFSI) or lithium bis(trifluoromethanesulfonyl)imide (LiTFSI); 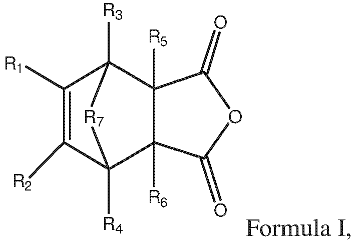 where, R₁ to R₆ are each independently selected from hydrogen, halogen, substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, substituted or unsubstituted C₁ to C₁₀ alkoxy, substituted or unsubstituted C₂ to C₁₀ alkoxy alkyl, substituted or unsubstituted C₆ to C₁₀ aryl, substituted or unsubstituted C₆ to C₁₀ aryloxy, substituted or unsubstituted C₁ to C₁₀ aldehyde, substituted or unsubstituted C₂ to C₁₀ acyl, substituted or unsubstituted C₂ to C₁₀ carboxylate, substituted or unsubstituted C₂ to C₁₀ carbonate, cyano, amino, hydroxyl, a substituted or unsubstituted C₁ to C₁₀ nitrogen-containing group, a substituted or unsubstituted C₁ to C₁₀ sulfur-containing group, a substituted or unsubstituted C₁ to C₁₀ boron-containing group, a substituted or unsubstituted C₁ to C₁₀ silicone-containing group, or a substituted or unsubstituted C₁ to C₁₀ phosphorus-containing group; R₇ is selected from substituted or unsubstituted C₁ to C₁₀ alkylene, substituted or unsubstituted C₃ to C₁₀ cycloalkylene, substituted or unsubstituted C₂ to C₁₀ alkenylene, substituted or unsubstituted C₄ to C₁₀ cycloalkenylene, a substituted or unsubstituted C₁ to C₁₀ oxygen-containing group, or a substituted or unsubstituted C₁ to C₁₀ nitrogen-containing group; and when being substituted, a substituent group includes at least one of halogen or cyano.

The compound of Formula I can polymerize on the surfaces of positive and negative electrodes to generate a protective film with excellent stability and inhibit the side reaction of a solvent at an electrode interface; and an anhydride group in the compound of Formula I synchronously adheres to the electrode surface, and can capture the trace acid generated by the decomposition of lithium salt and other components in the electrolyte at high temperature and inhibit its damage to a solid electrolyte interface (SEI) film on the surface of the negative electrode and a cathode electrolyte interface (CEI) film on the surface of the positive electrode, thereby improving the stability of the SEI film and the CEI film, and further inhibiting the decomposition and gas production of the solvent. Meanwhile, due to the site resistance of a bridging ring structure in the compound of Formula I, a relatively small film-forming impedance can be obtained, the dense accumulation of byproducts on the surface of an active material during high-temperature cycle and storage can be suppressed, and the transport of lithium-ions between the active material and the electrolyte is promoted. The additive B can increase the inorganic salt composition in the SEI film, further enhance the thermal stability of the interfacial protective film formed by the compound of Formula I, and can reduce the impedance of the SEI film and inhibit charging lithium plating during high-temperature cycle and storage. Therefore, the compound of Formula I and additive B work synergistically to improve the high-temperature cycle performance, storage performance, and safety performance of the electrochemical device.

In some embodiments, based on a mass of the electrolyte, a mass percentage of the compound of Formula I is a%, and 0.01 ≤ a ≤ 5.

In some embodiments, based on a mass of the electrolyte, a mass percentage of the additive B is b%, and 0.01 ≤ b ≤ 2.

In some embodiments, the compound of Formula I includes at least one of the following compounds:

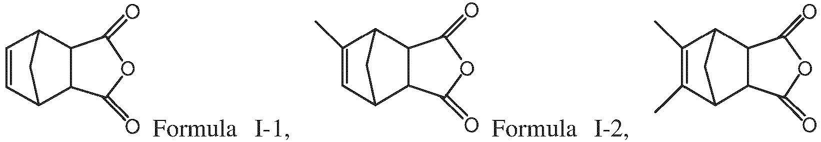

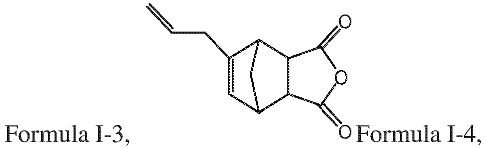

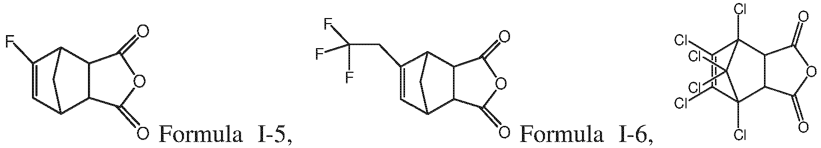

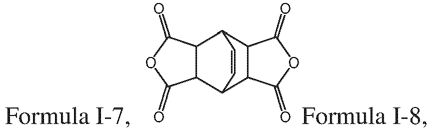

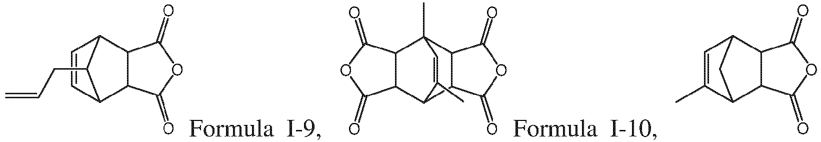

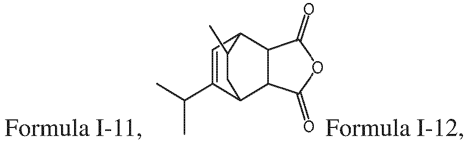

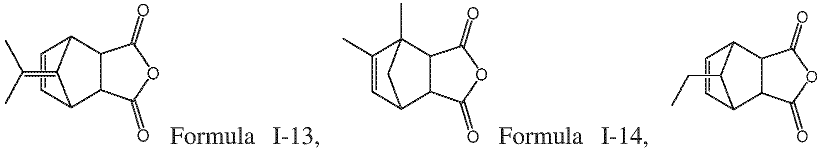

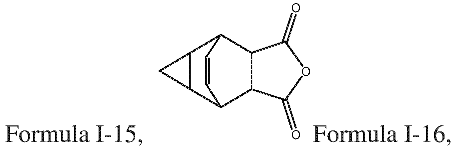

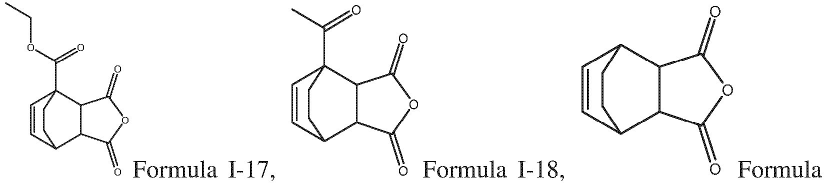

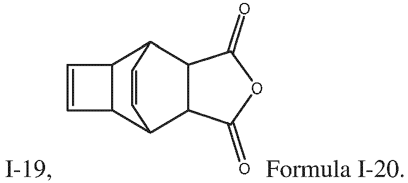

In some embodiments, the electrolyte further includes ethylene carbonate (EC), and based on a mass of the electrolyte, a mass percentage of the ethylene carbonate is 5% to 30%.

In some embodiments, the electrolyte further includes an additive C, the additive C includes at least one of vinylene carbonate (VC), fluoroethylene carbonate (FEC), difluoroethylene carbonate (DFEC) or vinylethylene carbonate (VEC), based on a mass of the electrolyte, a mass percentage of the additive C is c%, and 0.1 ≤ c ≤ 5.

In some embodiments, the electrolyte further includes a sulfur-oxygen double bond-containing compound, and the sulfur-oxygen double bond-containing compound includes at least one of 1,3-propane sultone (PS), 2,4-butane sultone, 1,4-butane sultone, 1,3,2-dioxathiolane 2,2-dioxide (DTD), prop-1-ene-1,3-sultone (PES), 1,5,2,4-dioxadithiane 2,2,4,4-tetraoxide (MMDS), divinyl sulfone (DVS), 1,3-propanedisulfonic anhydride, 1,3,2-dioxathiolane,4-methyl-,2,2-dioxide (PCS), butadiene sulfone, or 2,4,8,10-tetraoxa-3,9-dithiaspiro[5.5]undecane,3,3,9,9-tetraoxide.

In some embodiments, based on a mass of the electrolyte, a mass percentage of the sulfur-oxygen double bond-containing compound is d%, and 0.1 ≤ d ≤ 5.

In some embodiments, the electrolyte further includes a polynitrile compound, and the polynitrile compound includes at least one of adipic dinitrile (ADN), succinonitrile (SN), ethylene glycol bis(propionitrile) ether (DENE), 1,3,6-hexanetricarbonitrile (HTCN), or 1,2,3-tris(2-cyanoethoxy)propane.

In some embodiments, based on a mass of the electrolyte, a mass percentage of the polynitrile compound is e%, and 0.1 ≤ e ≤ 5.

This application further provides an electrochemical device, including the electrolyte described above.

This application further provides an electronic device, including the electrochemical device described above.

The electrolyte of this application includes the compound of Formula I and the additive B, so as to improve the high-temperature cycle performance, storage performance and safety performance of the electrochemical device.

### DETAILED DESCRIPTION OF EMBODIMENTS

The following embodiments will enable those skilled in the art to more fully understand this application, but do not limit this application in any way.

The term "halogen" means fluorine, chlorine, bromine and the like. The term "aldehyde" means a group containing -C(=O)-H. The term "acyl" means a group of atoms remaining after one or more hydroxyl groups are removed from carboxylic acid, the structural formula of which can be expressed as -C(=O)-R. In some embodiments, the acyl may include acetyl, propionyl, butyryl, valeryl, and the like. The term "carboxylate" means a group containing -C(=O)-O-. The term "carbonate" means a group containing -O-C(=O)-O-. The term "nitrogen-containing group" refers to a group containing a nitrogen atom in the group, including amino, amide, etc. The term "sulfur-containing group" means a group containing a sulfur atom in the group, including an alkylthio group, a sulfonate group, a sulfonic acid group, a sulfate group, a sulfone group, etc. The term "boron-containing group" means a group containing a boron atom in the group, including a borate ester group, etc. The term "silicone-containing group" means a group containing a silicon atom in the group, including silyl group, a silicate ester group, etc. The term "phosphorus-containing group" means a group containing a phosphorus atom in the group, including a phosphate ester group, a phosphite ester group, etc.

The term "oxygen-containing group" means a group containing oxygen atoms in the group, including a chain anhydride group, a cyclic anhydride group, carboxylate, carbonate, alkoxy, alkoxy alkyl, etc. The term "chain anhydride group" means a chain group formed by dehydration of an organic carboxylic acid. For example, the chain anhydride group may be a C₂ to C₁₀ chain anhydride group. In some embodiments, the chain anhydride group may include a dimethyl anhydride group, a diacetic anhydride group, a dipropionic anhydride group, a dibutyric anhydride group, a dipentanoic anhydride group, etc. The term "cyclic anhydride group" means a cyclic group formed by the anhydride group. For example, the cyclic anhydride group may be a C₄ to C₁₀ cyclic anhydride group. In some embodiments, the cyclic anhydride group may include a succinic anhydride group, a glutaric anhydride group, an adipic anhydride group, etc.

Under the high temperature environment, for lithium-ion batteries, the side reaction between an active material and an electrolyte is intensified, and gas production is likely to occur, leading to the expansion of the lithium-ion batteries, which causes a safety hazard. Moreover, an interface between the active material and the electrolyte is deteriorated, leading to the sharp decline in the reversible capacity of the lithium-ion batteries.

In view of this, this application provides an electrolyte to improve high-temperature cycle and storage performance of an electrochemical device. The electrolyte includes a compound of Formula I and an additive B, and the additive B includes at least one of LiPF₂O₂, lithium bis(oxalato)borate, lithium difluoro(oxalato) borate, lithium bis(fluorosulfonyl)imide or lithium bis(trifluoromethanesulfonyl)imide. 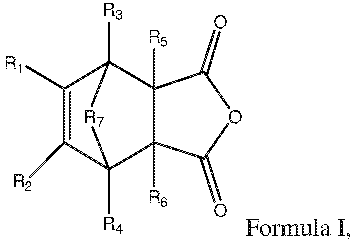 where, R₁ to R₆ are each independently selected from hydrogen, halogen, substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, substituted or unsubstituted C₁ to C₁₀ alkoxy, substituted or unsubstituted C₂ to C₁₀ alkoxy alkyl, substituted or unsubstituted C₆ to C₁₀ aryl, substituted or unsubstituted C₆ to C₁₀ aryloxy, substituted or unsubstituted C₁ to C₁₀ aldehyde, substituted or unsubstituted C₂ to C₁₀ acyl, substituted or unsubstituted C₂ to C₁₀ carboxylate, substituted or unsubstituted C₂ to C₁₀ carbonate, cyano, amino, hydroxyl, a substituted or unsubstituted C₁ to C₁₀ nitrogen-containing group, a substituted or unsubstituted C₁ to C₁₀ sulfur-containing group, a substituted or unsubstituted C₁ to C₁₀ boron-containing group, a substituted or unsubstituted C₁ to C₁₀ silicone-containing group, or a substituted or unsubstituted C₁ to C₁₀ phosphorus-containing group; R₇ is selected from substituted or unsubstituted C₁ to C₁₀ alkylene, substituted or unsubstituted C₃ to C₁₀ cycloalkylene, substituted or unsubstituted C₂ to C₁₀ alkenylene, substituted or unsubstituted C₄ to C₁₀ cycloalkenylene, a substituted or unsubstituted C₁ to C₁₀ oxygen-containing group, or a substituted or unsubstituted C₁ to C₁₀ nitrogen-containing group; and when being substituted, a substituent group includes at least one of halogen or cyano.

The compound of Formula I can polymerize on the surfaces of positive and negative electrodes to generate a protective film with excellent stability and inhibit the side reaction of a solvent at an electrode interface; and an anhydride group in the compound of Formula I synchronously adheres to the electrode surface, and can capture the trace acid generated by the decomposition of lithium salt and other components in the electrolyte at high temperature and inhibit its damage to a solid electrolyte interface (SEI) film on the surface of the negative electrode and a cathode electrolyte interface (CEI) film on the surface of the positive electrode, thereby improving the stability of the SEI film and the CEI film, and further inhibiting the decomposition and gas production of the solvent. Meanwhile, due to the site resistance of a bridging ring structure in the compound of Formula I, a relatively small film-forming impedance can be obtained, the dense accumulation of byproducts on the surface of an active material during high-temperature cycle and storage can be suppressed, and the transport of lithium-ions between the active material and the electrolyte is promoted. The additive B can increase the inorganic salt composition in the SEI film, further enhance the thermal stability of the interfacial protective film formed by the compound of Formula I, and can reduce the impedance of the SEI film and inhibit charging lithium plating during high-temperature cycle and storage. Therefore, the compound of Formula I and additive B work synergistically to improve the high-temperature cycle performance, storage performance, and safety performance of the electrochemical device.

In some embodiments, based on a mass of the electrolyte, a mass percentage of the compound of Formula I is a%, and 0.01 ≤ a ≤ 5. The mass percentage of the compound of Formula I is within the above range, along with increase of the mass percentage of the compound of Formula I, high-temperature cycle performance, high-temperature storage performance and safety performance of the electrochemical device are obviously improved. If the mass percentage of the compound of Formula I is too large, its improvement effect is no longer significantly enhanced, but may instead be detrimental to the reduction of the film-forming impedance and affect the kinetic performance of the electrochemical device. In some embodiments, based on the total mass of the electrolyte, the mass percentage of the compound of Formula I is 0.01%, 0.05%, 0.1%, 0.3%, 0.5%, 1%, 1.5%, 2%, 2.5%, 3%, 3.5%, 4%, 4.5%, 5%, or a range consisting of any two thereof.

In some embodiments, based on the mass of the electrolyte, a mass percentage of the additive B is b%, and 0.01 ≤ b ≤ 2. If the mass percentage of the additive B is too large, its improvement effect is no longer significantly enhanced, but may instead be detrimental to the reduction of the film-forming impedance and affect the kinetic performance of the electrochemical device. In some embodiments, based on the mass of the electrolyte, the mass percentage of the additive B is 0.01%, 0.05%, 0.1%, 0.5%, 1%, 1.5%, 2%, or a range consisting of any two thereof.

In some embodiments, the compound of Formula I includes at least one of the following compounds:

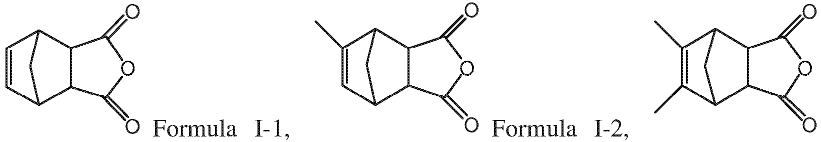

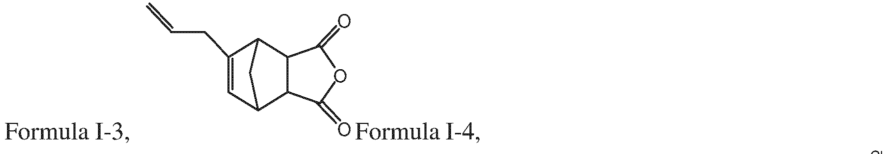

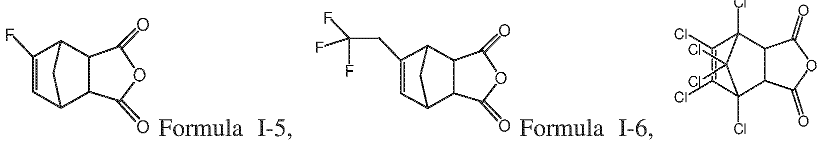

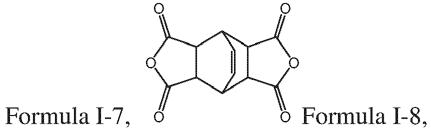

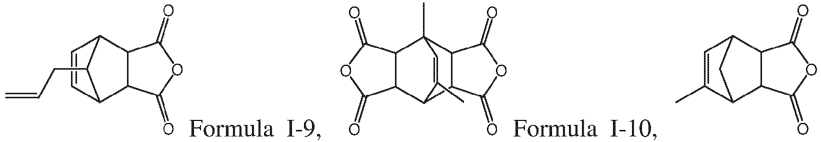

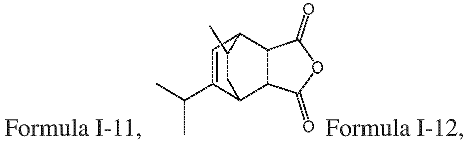

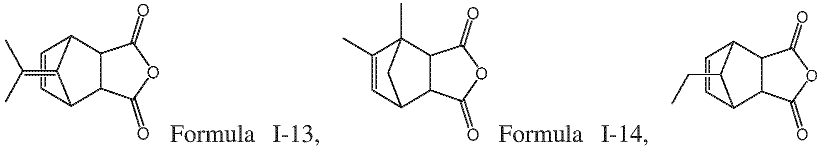

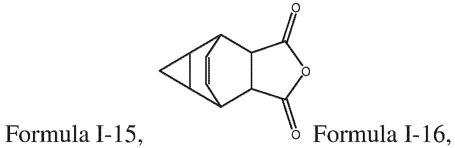

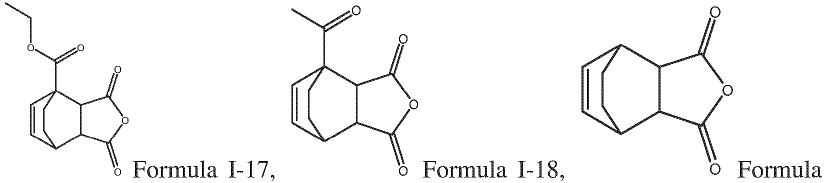

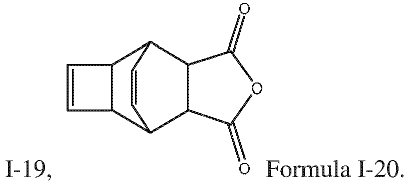

In some embodiments, the electrolyte further includes ethylene carbonate (EC). On the one hand, EC can be decomposed into a film to improve the compatibility of the protective film formed by the compound of Formula I with an inorganic salt, which in turn improves the stability of an SEI film. On the other hand, EC has a better passivation effect on a lithium plating interface of a negative electrode, thereby improving the capacity retention rate during high-temperature cycle and storage, as well as the safety performance during storage. In some embodiments, based on the mass of the electrolyte, a mass percentage of the ethylene carbonate is 5% to 30%. When the mass percentage of EC is too small, the protection on the negative electrode interface and the passivation effect on the lithium plating interface of the negative electrode by EC are relatively limited. When the mass percentage of EC is too large, since EC is not resistant to oxidation, it is prone to cause gas production and expansion of the electrochemical device. In some embodiments, based on the mass of the electrolyte, the mass percentage of the ethylene carbonate is 5%, 10%, 15%, 20%, 25%, 30%, or a range consisting of any two thereof.

In some embodiments, the electrolyte further includes an additive C, and the additive C includes at least one of vinylidene carbonate, fluoroethylene carbonate, difluoroethylene carbonate, or vinylethylene carbonate. The additive C may participate in the film formation of the compound of Formula I and improve the stability of the protective film formed by the compound of Formula I. Meanwhile, the additive C can well repair the SEI film that is damaged during cycle and storage, thereby inhibiting the side reaction of the electrolyte at the electrode interface and inhibiting the lithium deposition at the negative electrode interface. In some embodiments, based on the mass of the electrolyte, a mass percentage of the additive C is c%, and 0.1 ≤ c ≤ 5. If the mass percentage of the additive C is too small, the improvement effect of the additive C is relatively limited. If the mass percentage of the additive C is too large, it may lead to excessive impedance at the negative electrode interface, and the additive C is prone to oxidization and gas production at the positive electrode interface, thereby affecting the high-temperature storage performance of the electrochemical device. In some embodiments, based on the mass of the electrolyte, the mass percentage of the additive C is 0.1%, 0.5%, 1%, 2%, 3%, 4%, 5%, or a range consisting of any two thereof.

In some embodiments, the electrolyte further includes a sulfur-oxygen double bond-containing compound, and the sulfur-oxygen double bond-containing compound includes at least one of 1,3-propane sultone, 2,4-butane sultone, 1,4-butane sultone, 1,3,2-dioxathiolane 2,2-dioxide, prop-1-ene-1,3-sultone, 1,5,2,4-dioxadithiane 2,2,4,4-tetraoxide, divinyl sulfone, 1,3-propanedisulfonic anhydride, 1,3,2-dioxathiolane,4-methyl-,2,2-dioxide, butadiene sulfone, or 2,4,8,10-tetraoxa-3,9-dithiaspiro[5.5]undecane,3,3,9,9-tetraoxide. By adding the sulfur-oxygen double bond-containing compound, the high-temperature cycle performance, high-temperature storage performance and safety performance of the electrochemical device can be significantly improved. This is mainly due to the fact that the sulfur-oxygen double bond-containing compound helps the compound of Formula I and the additive B to form a more compatible and stable composite protective film at the positive and negative electrode interfaces, which further enhances the thermal stability of the interfacial protective film, reduces the growth of the impedance of the SEI film during storage, and inhibits charging lithium plating during high-temperature cycling and storage, thereby further improving the high-temperature cycle performance, high-temperature storage performance, and safety performance of the electrochemical device.

In some embodiments, based on the mass of the electrolyte, a mass percentage of the sulfur-oxygen double bond-containing compound is d%, and 0.1 ≤ d ≤ 5. If the mass percentage of the sulfur-oxygen double bond-containing compound is too small, its improvement effect is relatively limited. If the mass percentage of the sulfur-oxygen double bond-containing compound is too large, its improvement effect is no longer significantly enhanced, but may instead be detrimental to the reduction of the film-forming impedance. In some embodiments, based on the mass of the electrolyte, the mass percentage of the sulfur-oxygen double bond-containing compound is 0.1%, 0.5%, 1%, 2%, 3%, 4%, 5%, or a range consisting of any two thereof.

In some embodiments, the electrolyte further includes a polynitrile compound, and the polynitrile compound includes at least one of adipic dinitrile, succinonitrile, ethylene glycol bis(propionitrile) ether, 1,3,6-hexanetricarbonitrile, or 1,2,3-tris(2-cyanoethoxy)propane. By adding the polynitrile compound into the electrolyte, the high-temperature storage performance and safety performance of the electrochemical device can be significantly improved. This is due to the fact that the polynitrile compound can be well complexed with a positive active material, reducing the oxidation activity of the positive active material and lowering the side reaction, and at the same time inhibiting the positive transition metal from dissolving out and then being deposited to the negative electrode to cause damage to the SEI film, thus lowering the gas production and improving the capacity retention rate.

In some embodiments, based on the mass of the electrolyte, a mass percentage of the polynitrile compound is e%, and 0.1 ≤ e ≤ 5. If the mass percentage of the polynitrile compound is too small, its improvement effect is relatively limited. If the mass percentage of the polynitrile compound is too large, its improvement effect is no longer further enhanced, but may instead be detrimental to the reduction of the impedance of the electrochemical device. In some embodiments, based on the mass of the electrolyte, the mass percentage of the polynitrile compound is 0.1%, 0.5%, 1%, 2%, 3%, 4%, 5%, or a range consisting of any two thereof.

In some embodiments, the electrolyte may further include other organic solvents and electrolyte salts. The other organic solvent may include at least one of carbonate, carboxylate, ether, or other non-protonic solvents. Examples of carbonate solvents include dimethyl carbonate, diethyl carbonate, methyl ethyl carbonate, methyl propyl carbonate, ethylene propyl carbonate, dipropyl carbonate, propylene carbonate, 2,3-butylene carbonate, and the like. Examples of carboxylate solvents include methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, delta-valerolactone, and the like. Examples of ether solvents include 1,2-dimethoxyethane, bis(2-methoxy ethyl)ether, tetraethylene glycol dimethyl ether, dibutyl ether, tetrahydrofuran, 2-methyltetrahydrofuran, bis(2,2,2-trifluoroethyl) ether, and the like. The electrolyte salts may include at least one of an organic lithium salt or an inorganic lithium salt. In some embodiments, the electrolyte salts includes lithium hexafluorophosphate LiPF₆.

An embodiment of this application further provides an electrochemical device, including the electrolyte described above. In some embodiments, the electrochemical device may include an electrode assembly, and the electrode assembly may include a separator, a positive electrode plate and a negative electrode plate, where the separator is disposed between the positive electrode plate and the negative electrode plate.

In some embodiments, the positive electrode plate may include a positive current collector and a positive active material layer, and the positive active material layer is disposed on one side or two sides of the positive current collector. In some embodiments, aluminum (Al) foil may be adopted as the positive current collector, and certainly, other positive current collectors frequently used in the art may also be adopted. In some embodiments, the positive current collector may have a thickness ranging from 1 µm to 200 µm.

In some embodiments, the positive active material layer may include a positive active material, a binder and a conductive agent. In some embodiments, the positive active material contains a cobalt element. In some embodiments, the positive active material may include at least one of lithium cobalt oxide, lithium nickel cobalt manganate, lithium nickel cobalt aluminate, lithium manganate, lithium nickel manganate, or lithium iron phosphate. In some embodiments, Dv50 and Dv90 of the positive active material satisfy: 0.4 µm ≤ Dv50 ≤ 20 µm, and 2 µm ≤ Dv90 ≤ 40 µm; where Dv50 and Dv90 refer to corresponding particle diameters of particles when the cumulative volume percents reach 50% and 90% in volume distribution from left to right. In some embodiments, the positive active material includes an element A, the element A includes at least one of Al, Mg, Ti, Cr, B, Fe, Zr, Y, Na or S, and based on the mass of the positive active material, a mass percentage of the element A is less than 0.5%.

In some embodiments, the binder in the positive active material layer may include at least one of polyvinylidene fluoride, vinylidene fluoride-hexafluoropropylene copolymer, styrene-acrylate copolymer, styrene-butadiene copolymers, polyamide, polyacrylonitrile, polyacrylate ester, polyacrylic acid, polyacrylate salt, sodium carboxymethyl cellulose, polyvinyl acetate, polyvinylpyrrolidone, polyvinyl ether, polytetrafluoroethylene, or polyhexafluoropropylene. In some embodiments, the conductive agent in the positive active material layer may include at least one of conductive carbon black, Ketjen black, graphene, carbon nanotubes, or carbon fibers. In some embodiments, a mass ratio of the positive active material to the conductive agent to the binder in the positive active material layer may be (91 to 99): (0.5 to 3): (0.5 to 6). It should be understood that the foregoing is merely exemplary and the positive active material layer may be of any other suitable material, thickness and mass ratio.

In some embodiments, the negative electrode plate may include a negative current collector and a negative active material layer disposed on the negative current collector. In some embodiments, the negative current collector may adopt at least one of copper foil, nickel foil or a carbon-based current collector. In some embodiments, the negative active material layer may include a negative active material, a conductive agent and a binder. In some embodiments, the negative active material may include at least one of graphite or a silicon-based material. In some embodiments, the silicon-based material includes at least one of silicon, a silica material, a silicon-carbon material or a silica-carbon material. In some embodiments, the conductive agent in the negative active material layer may include at least one of conductive carbon black, Ketjen black, graphene, carbon nanotubes, or carbon fibers. In some embodiments, the binder in the negative active material layer may include at least one of sodium carboxymethyl cellulose (CMC), polyacrylic acid, polyacrylate salt, polyacrylate ester, polyvinyl pyrrolidone, polyimide, polysiloxane, or styrene-butadiene rubber. In some embodiments, a mass ratio of the negative active material to the conductive agent to the binder in the negative active material layer may be (78 to 98.5): (0.1 to 10): (0.1 to 10). It should be understood that the foregoing is merely exemplary, and may be of any other suitable material and mass ratio.

In some embodiments, the separator includes at least one of polyethylene, polypropylene, polyvinylidene fluoride, polyethylene terephthalate, polyimide or aramid. For example, the polyethylene includes and is selected from at least one of high density polyethylene, low density polyethylene or ultra-high molecular weight polyethylene. Polyethylene and polypropylene, in particular, have a good effect on preventing short circuits and can improve safety of a battery through a turn-off effect. In some embodiments, a thickness of the separator falls within a range of about 3 µm to 20 µm.

In some embodiments, a surface of the separator may further include a porous layer, and the porous layer is disposed on at least one surface of the separator. The porous layer includes an inorganic particle and a binder. The inorganic particle is selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide or barium sulfate. In some embodiments, pores of the separator have a diameter ranging from about 0.01 µm to 1 µm. The binder of the porous layer is selected from at least one of polyvinylidene fluoride, a vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polytetrafluoroethylene or polyhexafluoropropylene. The porous layer on the surface of the separator can improve heat resistance, oxidation resistance and electrolyte wettability of the separator and enhance bonding performance between the separator and the electrode plates.

In some embodiments of this application, the electrode assembly of the electrochemical device is a coiled electrode assembly, or a laminated electrode assembly. In some embodiments, the electrochemical device includes a lithium-ion battery, but this application is not limited thereto.

In some embodiments of this application, taking a lithium-ion battery as an example, a positive electrode plate, a separator and a negative electrode plate are sequentially wound or stacked into an electrode assembly, then the electrode assembly is put into a housing, for example, an aluminum-plastic film for packaging, an electrolyte is injected, chemical formation and packaging are performed, and then the lithium-ion battery is prepared. Then, a performance test is performed on the prepared lithium-ion battery.

A person skilled in the art will understand that the preparation method of the electrochemical device (e.g. lithium-ion battery) described above are merely an embodiment. Other methods frequently used in the art may be adopted without departing from the disclosure of this application.

An embodiment of this application further provides an electronic device including the foregoing electrochemical device. The electronic device according to the embodiment of this application is not particularly limited, and may be any known electronic device used in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television, a handheld cleaner, a portable CD player, a mini disk, a transceiver, an electronic notepad, a calculator, a memory card, a portable voice recorder, a radio, a backup power supply, a motor, an automobile, a motorcycle, a power-assisted bicycle, a bicycle, a lighting appliance, a toy, a game console, a watch, an electric tool, a flashlight, a camera, a large household battery, a lithium-ion capacitor, and the like.

Some specific examples and comparative examples are listed below to better illustrate this application. The lithium-ion battery is taken as an example.

### Example 1

Preparing a positive electrode plate: adopting an aluminum foil of 10 µm as a positive current collector, and dissolving LiNi_{0.5}Co_{0.2}Mn_{0.3}O₂ as a positive active material, conductive carbon black as a conductive agent and polyvinylidene fluoride as a binder in an N-methyl-pyrrolidone (NMP) solution according to a mass ratio of 97:1.4:1.6 to form a positive electrode slurry, where a solid content of the positive electrode slurry is 72 wt%. Coating one surface of the positive current collector with the positive electrode slurry, drying at 85°C, repeating the above steps on the other surface of the positive current collector, and obtaining a positive electrode plate with double surfaces coated with positive active material layers, the coating thickness of a single surface being 80 µm. Then, performing cold pressing and cutting to obtain the positive electrode plate.

Preparing a negative electrode plate: dissolving graphite, conductive carbon black as a conductive agent, sodium carboxymethyl cellulose (CMC) and styrene-butadiene rubber (SBR) as a binder in deionized water according to a mass ratio of 96.4:1.5:0.5:1.6 to form a negative electrode slurry, where a solid content of the negative electrode slurry is 54 wt%. Adopting a copper foil of 8 µm as a negative current collector, coating one surface of the negative current collector with the negative electrode slurry, drying at 85°C, repeating the above steps on the other surface of the negative current collector, and obtaining a negative electrode plate with double surfaces coated with negative active material layers, the coating thickness of a single surface being 50 µm. Then, performing cold pressing and cutting to obtain the negative electrode plate.

Preparing a separator: using polyethylene (PE) microporous membrane of 7 µm in thickness as a separator.

Preparing an electrolyte: in an environment with a water content of less than 10 ppm, mixing ethylene carbonate (EC), propylene carbonate (PC), methyl ethyl carbonate (EMC) and diethyl carbonate (DEC) according to a mass ratio of X:(40-X):30:30 to obtain a basic solvent, then adding a lithium salt LiPF₆ and an additive to the above basic solvent, and uniformly mixing to obtain an electrolyte, where based on the mass of the electrolyte, the mass percentage of the LiPF₆ is 12.5%, the type and content of the additive are shown in the tables below, and the content of each substance is the mass percentage obtained by calculation based on the mass of the electrolyte.

Preparing a lithium-ion battery: stacking the positive electrode plate, the separator, and the negative electrode plate in sequence, locating the separator between the positive electrode plate and the negative electrode plate to play a role of separation, and winding to obtain an electrode assembly. Putting the electrode assembly into an outer aluminum-plastic film package, removing water at 80°C, injecting the foregoing electrolyte, sealing the package, and performing steps such as chemical formation, degassing, and edge trimming to obtain the lithium-ion battery.
Parameters of other embodiments and comparative embodiments are changed on the basis of Example 1, where the contents of EC and an additive in the electrolyte may be different from those in Example 1, the remaining part of the electrolyte except the EC and the additive includes the same masses of PC, EMC and DEC, and the specific contents of the EC and the additive refer to the tables below and relevant description.

The test methods for performance of a lithium-ion battery of this application are described below.

### Testing the cycle performance of the lithium-ion battery

Putting a lithium-ion battery into an incubator of 45°C, standing for 30 minutes, and making the lithium-ion battery achieve the constant temperature. Charging the lithium-ion battery being in constant temperature to a voltage of 4.2 V at a constant current of 1 C and to a current of 0.05 C at a constant voltage of 4.2 V, and then discharging to a voltage of 2.8 V at a constant current of 1 C, where this is the first charge-discharge cycle. Taking the first discharge capacity of 100%, performing charge-discharge cycles repeatedly, until the discharge capacity fades to 80%, stopping the test, and recording the number of cycles as an indicator for evaluating the cycle performance of the lithium-ion battery.

Meanwhile, testing the cycle performance of the lithium-ion battery at 60 °C, and the testing method being the same as that for testing the cycle performance at 45°C except for different temperature.

Testing high-temperature storage performance of lithium-ion battery (80°C, stored for 1680 h)

### A: 100%SOC storage

Putting a lithium-ion battery into an incubator of 25°C, standing for 30 minutes, and making the lithium-ion battery achieve the constant temperature. Charging to 4.2 V at a constant current of 1 C, charging to a current of 0.05 C at a constant voltage, then discharging to 2.8 V at a constant current of 1 C, and recording a discharge capacity as an initial discharge capacity of the lithium-ion battery. Then charging to 4.2 V at a constant current of 0.5 C, charging to a current of 0.05 C at a constant voltage, testing by a micrometer and recording the thickness of the lithium-ion battery as an initial thickness. Transferring the tested lithium-ion battery to an incubator of 80 °C to be stored for 1680 h, after storage, testing the thickness of the lithium-ion battery, transferring the lithium-ion battery to the incubator of 25°C, standing for 60 minutes, making the lithium-ion battery achieve the constant temperature, discharging to 2.8 V at a constant current of 0.5 C, and recording the discharge capacity as a residual capacity of the lithium-ion battery. Charging to 4.2 V at a constant current of 0.5 C, charging to a current of 0.05 C at a constant voltage, then discharging to 2.8 V at a constant current of 0.5 C, and recording the discharge capacity as a recoverable discharge capacity of the lithium-ion battery. Calculating a storage thickness expansion rate of the lithium-ion battery as an indicator for evaluating the high-temperature storage gas production rate of the lithium-ion battery, and calculating a recoverable capacity retention rate after storage of the lithium-ion battery. Thickness expansion rate = (thickness after storage - initial thickness)/initial thickness × 100% Recoverable capacity retention rate = recoverable discharge capacity after storage/initial discharge capacity × 100%

### B: 50% SOC storage

Putting a lithium-ion battery into an incubator of 25°C, standing for 30 minutes, and making the lithium-ion battery achieve the constant temperature. Charging to 4.2 V at a constant current of 1 C, charging to a current of 0.05 C at a constant voltage, then discharging to 2.8 V at a constant current of 1 C, and recording a discharge capacity as an initial discharge capacity of the lithium-ion battery. Then charging to 3.65 V at a constant current of 0.5 C, charging to a current of 0.05 C (50%SOC) at a constant voltage, testing by a micrometer and recording the thickness of the lithium-ion battery as an initial thickness. Transferring the tested lithium-ion battery to an incubator of 80 °C to be stored for 1680 h, after storage, testing the thickness of the lithium-ion battery, transferring the lithium-ion battery to the incubator of 25°C, standing for 60 minutes, making the lithium-ion battery achieve the constant temperature, discharging to 2.8 V at a constant current of 0.5 C, and recording the discharge capacity as a residual capacity of the lithium-ion battery. Charging to 4.2 V at a constant current of 0.5 C, charging to a current of 0.05 C at a constant voltage, then discharging to 2.8 V at a constant current of 0.5 C, and recording the discharge capacity as a recoverable discharge capacity of the lithium-ion battery. Calculating a storage thickness expansion rate of the lithium-ion battery as an indicator for evaluating the high-temperature storage gas production rate of the lithium-ion battery, and calculating a recoverable capacity retention rate after storage of the lithium-ion battery. Meanwhile, recording the number of smoky and burning lithium-ion batteries in 10 stored lithium-ion batteries during storage. Storage at 90 °C is the same as storage at 80°C.
Thickness expansion rate = (thickness after storage - initial thickness)/initial thickness × 100%

### C: 0%SOC storage

Putting a lithium-ion battery into an incubator of 25°C, standing for 30 minutes, and making the lithium-ion battery achieve the constant temperature. Charging to 4.2 V at a constant current of 1 C, charging to a current of 0.05 C at a constant voltage, then discharging to 2.8 V at a constant current of 1 C, and recording a discharge capacity as an initial discharge capacity of the lithium-ion battery. Testing by a micrometer and recording the thickness of the lithium-ion battery as an initial thickness. Transferring the tested lithium-ion battery to an incubator of 80 °C to be stored for 1680 h, after storage, testing the thickness of the lithium-ion battery, transferring the lithium-ion battery to the incubator of 25°C, standing for 60 minutes, making the lithium-ion battery achieve the constant temperature, charging to 4.2 V at a constant current of 0.5 C, charging to a current of 0.05 C at a constant voltage, then discharging to 2.8 V at a constant current of 0.5 C, and recording the discharge capacity as a recoverable discharge capacity of the lithium-ion battery. Calculating a storage thickness expansion rate of the lithium-ion battery as an indicator for evaluating the high-temperature storage gas production rate of the lithium-ion battery, and calculating a recoverable capacity retention rate after storage of the lithium-ion battery. Thickness expansion rate = (thickness during storage - initial thickness)/initial thickness × 100% Recoverable capacity retention rate = recoverable discharge capacity after storage/initial discharge capacity × 100%

### Testing over-charge of lithium-ion battery

Discharging a lithium-ion battery to 2.8 V at 0.5 C at 25°C, then charging to 5.4 V at a constant current of 2 C, charging for 3 h at a constant voltage, and monitoring the change of surface temperature of the lithium-ion battery (pass standards: no firing, burning or explosion of the battery). Testing 10 lithium-ion batteries in each example, and recording a passing rate.

### Hot oven test

Charging a lithium-ion battery to 4.2 V at a constant current of 0.5 C at 25 °C, then charging to a current of 0.05 C at a constant voltage of 4.2 V, putting the fully-charged lithium-ion battery into a high-low temperature chamber, increasing the temperature to 150 °C at a rate of 5 °C/minute, keeping the temperature for 1 h at 150 °C, and monitoring the lithium-ion battery, where pass standards are: no firing, burning or explosion of the battery). Testing 10 lithium-ion batteries in each example, and recording a passing rate.

Table 1 shows composition of electrolytes and evaluation results of corresponding lithium-ion batteries in Examples 1 to 24 and Comparative Examples 1 to 4.

**Table 1**

| Example | EC | Additive A | | Additive B | | Number of cycles at 45°C | Number of cycles at 60°C | 80°C 100%SO C storage thickness expansion rate (%) | 80°C 50%SOC storage thickness expansion rate (%) | 80°C 0%SOC storage thickness expansion rate (%) | 80°C 100%SOC storage recoverable capacity retention rate (%) | 80°C 0%SOC storage recoverable capacity retention rate (%) | 80°C 50%SOC storage burning number (a total number of 10) |
|---|---|---|---|---|---|---|---|---|---|---|---|---|---|
| | Content wt% | Type | Content wt% | Type | Content wt% | | | | | | | | |
| Comparative Example 1 | 15 | / | / | / | / | 235 | 188 | 241 | 180 | 122 | 62 | 65 | 10 |
| Comparative Example 2 | 15 | Succinic anhydride | 0.5 | / | / | 368 | 294 | 168 | 136 | 95 | 70 | 74 | 9 |
| Comparative Example 3 | 15 | I-1 | 0.5 | / | / | 485 | 378 | 108 | 97 | 62 | 75 | 80 | 6 |
| Comparative Example 4 | 15 | / | / | LiPO₂F₂ | 0.5 | 427 | 348 | 65 | 56 | 41 | 73 | 76 | 5 |
| Example 1 | 15 | I-1 | 0.01 | LiPO₂F₂ | 0.5 | 462 | 375 | 51 | 41 | 36 | 78 | 81 | 4 |
| Example 2 | 15 | I-1 | 0.1 | LiPO₂F₂ | 0.5 | 490 | 391 | 35 | 28 | 22 | 80 | 83 | 3 |
| Example 3 | 15 | I-1 | 0.3 | LiPO₂F₂ | 0.5 | 685 | 539 | 24 | 20 | 15 | 82 | 86 | 1 |
| Example 4 | 15 | I-1 | 0.5 | LiPO₂F₂ | 0.5 | 745 | 596 | 15 | 12 | 10 | 85 | 89 | 0 |
| Example 5 | 15 | I-1 | 1 | LiPO₂F₂ | 0.5 | 791 | 634 | 13 | 10 | 8 | 86 | 90 | 0 |
| Example 6 | 15 | I-1 | 2 | LiPO₂F₂ | 0.5 | 802 | 647 | 12 | 9 | 7 | 86 | 90 | 0 |
| Example 7 | 15 | I-1 | 3 | LiPO₂F₂ | 0.5 | 785 | 616 | 11 | 8 | 7 | 85 | 89 | 0 |
| Example 8 | 15 | I-1 | 5 | LiPO₂F₂ | 0.5 | 733 | 574 | 10 | 8 | 6 | 83 | 87 | 0 |
| Example 9 | 15 | I-1 | 0.5 | LiPO₂F₂ | 0.01 | 523 | 421 | 76 | 65 | 48 | 77 | 81 | 3 |
| Example 10 | 15 | I-1 | 0.5 | LiPO₂F₂ | 0.1 | 638 | 523 | 33 | 24 | 17 | 82 | 84 | 2 |
| Example 11 | 15 | I-1 | 0.5 | LiPO₂F₂ | 1.0 | 762 | 615 | 13 | 11 | 9 | 86 | 90 | 0 |
| Example 12 | 15 | I-1 | 0.5 | LiPO₂F₂ | 2.0 | 731 | 582 | 11 | 10 | 8 | 83 | 86 | 0 |
| Example 13 | 15 | I-2 | 0.5 | LiPO₂F₂ | 0.5 | 736 | 585 | 16 | 15 | 12 | 84 | 88 | 0 |
| Example 14 | 15 | I-3 | 0.5 | LiPO₂F₂ | 0.5 | 721 | 582 | 18 | 16 | 12 | 84 | 88 | 1 |
| Example 15 | 15 | I-5 | 0.5 | LiPO₂F₂ | 0.5 | 740 | 591 | 16 | 13 | 11 | 85 | 89 | 0 |
| Example 16 | 15 | I-8 | 0.5 | LiPO₂F₂ | 0.5 | 772 | 618 | 13 | 10 | 8 | 86 | 90 | 0 |
| Example 17 | 15 | I-11 | 0.5 | LiPO₂F₂ | 0.5 | 733 | 583 | 15 | 14 | 11 | 83 | 87 | 0 |
| Example 18 | 15 | I-1 | 0.5 | LiDFOB | 0.5 | 739 | 567 | 18 | 15 | 14 | 85 | 88 | 0 |
| Example 19 | 15 | I-1 | 0.5 | LiBOB | 0.5 | 741 | 608 | 20 | 18 | 14 | 84 | 88 | 1 |
| Example 20 | 15 | I-1 | 0.5 | LiFSI | 0.5 | 641 | 512 | 29 | 24 | 16 | 80 | 81 | 2 |
| Example 21 | 15 | I-1 | 0.5 | LiTFSI | 0.5 | 632 | 501 | 31 | 25 | 17 | 80 | 80 | 2 |
| Example 22 | 5 | I-1 | 0.5 | LiPO₂F₂ | 0.5 | 512 | 411 | 20 | 14 | 13 | 80 | 82 | 3 |
| Example 23 | 20 | I-1 | 0.5 | LiPO₂F₂ | 0.5 | 791 | 639 | 18 | 16 | 12 | 83 | 85 | 0 |
| Example 24 | 30 | I-1 | 0.5 | LiPO₂F₂ | 0.5 | 798 | 657 | 31 | 23 | 15 | 80 | 81 | 0 |

By comparing Examples 1 to 24 with Comparative Examples 1 to 4, it can be known that the compound of Formula I and the lithium salt additive B being simultaneously added into the electrolyte can significantly improve the high-temperature cycle performance, storage performance and safety performance of the lithium-ion battery. This may be because a norbornene group in the compound of Formula I can polymerize on the surfaces of positive and negative electrodes to form a film to enhance film-forming stability and inhibit the side reaction of a solvent at an electrode interface; and an anhydride group in the compound of Formula I synchronously adheres to the electrode surface, and can capture the trace acid generated by the decomposition of lithium salt and other components in the electrolyte at high temperature and inhibit its damage to an SEI film and a CEI film, thereby improving the stability of the SEI film and the CEI film, and further inhibiting the decomposition and gas production of the solvent. Meanwhile, due to the site resistance of a bridging ring structure in the compound of Formula I, a relatively small film-forming impedance can be obtained, the dense accumulation of byproducts on the surface of an active material during high-temperature cycle and storage can be suppressed, and the transport of lithium ions between the active material and the electrolyte is promoted. In addition, addition of the lithium salt additive B can increase the inorganic salt composition in the SEI film, further enhance the thermal stability of the interfacial protective film formed by the compound of Formula I, and can reduce the impedance of the SEI film and inhibit lithium plating during high-temperature cycle and storage. Therefore, the compound of Formula I and the lithium salt additive B work synergistically to significantly improve the high-temperature cycle performance, storage performance, and safety performance of the lithium-ion battery.

In addition, the EC can be decomposed into a film to generate organic and inorganic composite, so that the compatibility of the protective film formed by the compound of Formula I with inorganic salts can be improved, thereby improving the stability of the SEI film. At the same time, because the EC has a good passivation effect on the negative electrode lithium plating interface, the capacity retention rate of the lithium-ion battery during high-temperature cycle and storage, and the safety performance during storage can be improved. However, when the content of the EC is too high, because the EC is intolerant to oxidation, the gas production of 100%SOC storage has a worsening trend. When the content of the EC is too low, the negative electrode SEI film cannot be repaired in time, and the lithium plating cannot be effectively passivated, and the storage at high temperatures causes a violent reaction, resulting in an increase in the probability of thermal failure of the lithium-ion battery.

Table 2 shows composition of electrolytes and evaluation results of corresponding lithium-ion batteries in Examples 4, 25 to 35.

**Table 2**

| | Additive A | | Additive B | | Additive C | | Number of cycles at 45°C | Number of cycles at 60°C | 80°C 100%SOC storage thickness expansion rate (%) | 80°C 50%SOC storage thickness expansion rate (%) | 80°C 0%SOC storage thickness expansion rate (%) | 80°C 100%SOC storage recoverable capacity retention rate (%) | 80°C 0%SOC storage recoverable capacity retention rate (%) | 80°C 50%SO C storage burning number (a total number of 10) |
|---|---|---|---|---|---|---|---|---|---|---|---|---|---|---|
| Example | Type | Content wt% | Type | Content wt% | Type | Content wt% | | | | | | | | |
| Example 4 | I-1 | 0.5 | LiPO₂F₂ | 0.5 | | | 745 | 596 | 15 | 12 | 10 | 85 | 89 | 0 |
| Example 25 | I-1 | 0.5 | LiPO₂F₂ | 0.5 | VC | 0.1 | 792 | 634 | 14 | 11 | 9 | 86 | 90 | 0 |
| Example 26 | I-1 | 0.5 | LiPO₂F₂ | 0.5 | VC | 0.5 | 831 | 665 | 11 | 9 | 8 | 88 | 91 | 0 |
| Example 27 | I-1 | 0.5 | LiPO₂F₂ | 0.5 | VC | 1 | 975 | 780 | 10 | 8 | 8 | 88 | 92 | 0 |
| Example 28 | I-1 | 0.5 | LiPO₂F₂ | 0.5 | VC | 2 | 997 | 798 | 12 | 10 | 9 | 88 | 91 | 0 |
| Example 29 | I-1 | 0.5 | LiPO₂F₂ | 0.5 | VC | 5 | 803 | 682 | 19 | 12 | 11 | 91 | 86 | 1 |
| Example 30 | I-1 | 0.5 | LiPO₂F₂ | 0.5 | FEC | 1 | 851 | 681 | 10 | 9 | 8 | 90 | 92 | 0 |
| Example 31 | I-1 | 0.5 | LiPO₂F₂ | 0.5 | DFEC | 1 | 873 | 698 | 9 | 8 | 8 | 91 | 93 | 0 |
| Example 32 | I-1 | 0.5 | LiPO₂F₂ | 0.5 | VEC | 0.5 | 992 | 794 | 8 | 9 | 7 | 92 | 92 | 0 |
| Example 33 | I-2 | 0.5 | LiPO₂F₂ | 0.5 | FEC | 1 | 845 | 676 | 11 | 10 | 9 | 90 | 92 | 0 |
| Example 34 | I-2 | 0.5 | LiDFOB | 0.5 | FEC | 1 | 835 | 668 | 10 | 10 | 9 | 92 | 93 | 0 |
| Example 35 | I-1 | 0.5 | LiPO₂F₂ | 0.5 | VC | 0.5 | 1132 | 906 | 9 | 9 | 8 | 94 | 95 | 0 |
| | | | LiDFOB | 0.5 | FEC | 1 | | | | | | | | |

By comparing Example 25 to 35 with Example 4, it can be known that the compound of Formula I, the lithium salt additive B and a specific content of additive C being simultaneously added into the electrolyte can significantly improve the high-temperature cycle performance, high-temperature storage performance and safety performance of the lithium-ion battery. This is mainly because the additive C can participate in film formation of the compound of Formula I, and improve the stability of the protective film formed by the compound of Formula I. At the same time, the additive C can well repair the damaged SEI film on the negative electrode interface during high-temperature cycle and storage, and inhibit side reaction and negative electrode lithium deposition.

Table 3 and Table 4 show composition of electrolytes and evaluation results of corresponding lithium-ion batteries in Examples 36 to 45 and Example 4.

**Table 3**

| | Additive A | | Additive B | | Sulfur-oxygen double bond-containing compound | |
|---|---|---|---|---|---|---|
| Example | Type | Content wt% | Type | Content wt% | Type | Content wt% |
| Example 4 | I-1 | 0.5 | LiPO₂F₂ | 0.5 | / | / |
| Example 36 | I-1 | 0.5 | LiPO₂F₂ | 0.5 | PS | 0.1 |
| Example 37 | I-1 | 0.5 | LiPO₂F₂ | 0.5 | PS | 1 |
| Example 38 | I-1 | 0.5 | LiPO₂F₂ | 0.5 | PS | 3 |
| Example 39 | I-1 | 0.5 | LiPO₂F₂ | 0.5 | PS | 5 |
| Example 40 | I-1 | 0.5 | LiPO₂F₂ | 0.5 | DTD | 1 |
| Example 41 | I-1 | 0.5 | LiPO₂F₂ | 0.5 | PES | 0.5 |
| Example 42 | I-1 | 0.5 | LiPO₂F₂ | 0.5 | MMDS | 0.5 |
| Example 43 | I-2 | 0.5 | LiPO₂F₂ | 0.5 | PS | 3 |
| Example 44 | I-2 | 0.5 | LiDFOB | 0.5 | PS | 3 |
| Example 45 | I-1 | 0.5 | LiPO₂F₂ | 0.5 | PS | 3 |
| | | | LiDFOB | 0.5 | DTD | 1 |

**Table 4**

| Example | Number of cycles at 45°C | Number of cycles at 60°C | 80°C 100%SOC storage thickness expansion rate (%) | 80°C 50%SOC storage thickness expansion rate (%) | 80°C 0%SOC storage thickness expansion rate (%) | 80°C 100%SOC storage recoverable capacity retention rate (%) | 80°C 0%SOC storage recoverable capacity retention rate (%) | 90°C 50%SOC storage burning number (a total number of 10) |
|---|---|---|---|---|---|---|---|---|
| Example 4 | 745 | 596 | 15 | 12 | 10 | 85 | 89 | 2 |
| Example 36 | 762 | 612 | 13 | 11 | 8 | 86 | 90 | 1 |
| Example 37 | 821 | 657 | 10 | 9 | 6 | 88 | 91 | 0 |
| Example 38 | 915 | 732 | 8 | 6 | 4 | 90 | 92 | 0 |
| Example 39 | 937 | 750 | 7 | 5 | 3 | 90 | 92 | 0 |
| Example 40 | 921 | 737 | 9 | 7 | 5 | 89 | 91 | 0 |
| Example 41 | 952 | 762 | 7 | 5 | 4 | 91 | 93 | 0 |
| Example 42 | 932 | 746 | 9 | 8 | 7 | 90 | 92 | 0 |
| Example 43 | 901 | 721 | 7 | 6 | 4 | 89 | 91 | 0 |
| Example 44 | 895 | 716 | 6 | 5 | 4 | 89 | 91 | 0 |
| Example 45 | 1391 | 1113 | 5 | 5 | 4 | 93 | 95 | 0 |

By comparing Examples 36 to 45 with Example 4, it can be seen that further adding the sulfur-oxygen double bond-containing compound into the electrolyte can more significantly improve the high-temperature cycle performance, high-temperature storage performance and safety performance of the lithium-ion battery. This is mainly due to the fact that the sulfur-oxygen double bond-containing compound helps the compound of Formula I and the additive B to form a more compatible and stable composite protective film at the positive and negative electrode interfaces, which further enhances the thermal stability of the interfacial protective film, and reduces the growth of the impedance of the SEI film during high-temperature cycle and storage, thereby significantly improving the high-temperature cycle performance, high-temperature storage performance, and safety performance of the lithium-ion battery.

Table 5 and Table 6 show composition of electrolytes and evaluation results of corresponding lithium-ion batteries in Examples 46 to 55 and Example 4.

**Table 5**

| | Additive A | | Additive B | | Polynitrile compound | |
|---|---|---|---|---|---|---|
| Example | Type | Content wt% | Type | Content wt% | Type | Content wt% |
| Example 4 | I-1 | 0.5 | LiPO₂F₂ | 0.5 | / | / |
| Example 46 | I-1 | 0.5 | LiPO₂F₂ | 0.5 | ADN | 0.1 |
| Example 47 | I-1 | 0.5 | LiPO₂F₂ | 0.5 | ADN | 1 |
| Example 48 | I-1 | 0.5 | LiPO₂F₂ | 0.5 | ADN | 3 |
| Example 49 | I-1 | 0.5 | LiPO₂F₂ | 0.5 | ADN | 5 |
| Example 50 | I-1 | 0.5 | LiPO₂F₂ | 0.5 | DENE | 1 |
| Example 51 | I-1 | 0.5 | LiPO₂F₂ | 0.5 | HTCN | 1 |
| Example 52 | I-1 | 0.5 | LiPO₂F₂ | 0.5 | 1,2,3-tris(2-cyanoethoxy)propane | 1 |
| Example 53 | I-2 | 0.5 | LiPO₂F₂ | 0.5 | HTCN | 1 |
| Example 54 | I-2 | 0.5 | LiDFOB | 0.5 | ADN | 1 |
| | | | | | HTCN | 1 |
| Example 55 | I-1 | 0.5 | LiPO₂F₂ | 0.5 | ADN | 1 |
| | | | LiDFOB | 0.5 | HTCN | 1 |

**Table 6**

| Example | 80°C 100%SOC storage thickness expansion rate (%) | 80°C 50%SOC storage thickness expansion rate (%) | 80°C 0%SOC storage thickness expansion rate (%) | 80°C 100%SOC storage recoverable capacity retention rate (%) | 80°C 0%SOC storage recoverable capacity retention rate (%) | 90°C 50%SOC storage burning number (a total number of 10) | Hot oven test (number of batteries passing test in 10 batteries) | Over charge test (number of batteries passing test in 10 batteries) |
|---|---|---|---|---|---|---|---|---|
| Example 4 | 15 | 12 | 10 | 85 | 89 | 2 | 6 | 6 |
| Example 46 | 14 | 11 | 9 | 86 | 90 | 1 | 8 | 8 |
| Example 47 | 12 | 10 | 8 | 88 | 91 | 0 | 9 | 9 |
| Example 48 | 8 | 7 | 6 | 90 | 91 | 0 | 10 | 10 |
| Example 49 | 7 | 6 | 5 | 90 | 90 | 0 | 10 | 10 |
| Example 50 | 9 | 8 | 6 | 91 | 91 | 0 | 10 | 10 |
| Example 51 | 7 | 7 | 5 | 92 | 92 | 0 | 10 | 10 |
| Example 52 | 6 | 6 | 5 | 92 | 92 | 0 | 10 | 10 |
| Example 53 | 7 | 6 | 5 | 91 | 92 | 0 | 10 | 10 |
| Example 54 | 7 | 6 | 5 | 91 | 92 | 0 | 10 | 10 |
| Example 55 | 6 | 5 | 4 | 92 | 93 | 0 | 10 | 10 |

By comparing Examples 46 to 55 with Example 4, it can be seen that further adding the polynitrile compound into the electrolyte on the basis of adding the compound of Formula I and the lithium salt additive B can significantly improve the high-temperature storage performance and safety performance of the lithium-ion battery. This is mainly because the polynitrile compound can be well complexed with a positive electrode active material, reducing the oxidation activity of the positive electrode material and lowering the side reaction, and at the same time inhibiting the positive transition metal from dissolving out and then being deposited to the negative electrode to cause damage to the SEI film, thus lowering the gas production and improving the safety performance of the lithium-ion battery.

What is described above is merely preferred embodiments of this application and an illustration of technical principles utilized. A person skilled in the art understands that the scope of the disclosure involved in this application is not limited to the technical solutions formed by particular combinations of the foregoing technical features, but also covers other technical solutions formed by any combinations of the foregoing technical features or equivalent features thereof, for example, the technical solutions formed by mutual replacement of the foregoing features and the technical features having similar functions disclosed in this application.

## Claims

1. An electrolyte, comprising a compound of Formula I and an additive B, wherein the additive B comprises at least one of LiPF₂O₂, lithium bis(oxalato)borate, lithium difluoro(oxalato) borate, lithium bis(fluorosulfonyl)imide or lithium bis(trifluoromethanesulfonyl)imide; 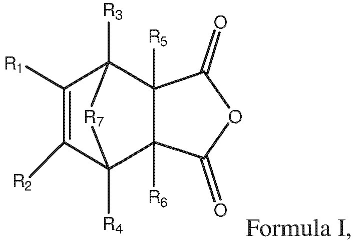
wherein, R₁ to R₆ are each independently selected from hydrogen, halogen, substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, substituted or unsubstituted C₁ to C₁₀ alkoxy, substituted or unsubstituted C₂ to C₁₀ alkoxy alkyl, substituted or unsubstituted C₆ to C₁₀ aryl, substituted or unsubstituted C₆ to C₁₀ aryloxy, substituted or unsubstituted C₁ to C₁₀ aldehyde, substituted or unsubstituted C₂ to C₁₀ acyl, substituted or unsubstituted C₂ to C₁₀ carboxylate, substituted or unsubstituted C₂ to C₁₀ carbonate, cyano, amino, hydroxyl, a substituted or unsubstituted C₁ to C₁₀ nitrogen-containing group, a substituted or unsubstituted C₁ to C₁₀ sulfur-containing group, a substituted or unsubstituted C₁ to C₁₀ boron-containing group, a substituted or unsubstituted C₁ to C₁₀ silicone-containing group, or a substituted or unsubstituted C₁ to C₁₀ phosphorus-containing group;
R₇ is selected from substituted or unsubstituted C₁ to C₁₀ alkylene, substituted or unsubstituted C₃ to C₁₀ cycloalkylene, substituted or unsubstituted C₂ to C₁₀ alkenylene, substituted or unsubstituted C₄ to C₁₀ cycloalkenylene, a substituted or unsubstituted C₁ to C₁₀ oxygen-containing group, or a substituted or unsubstituted C₁ to C₁₀ nitrogen-containing group; and
when being substituted, a substituent group comprises at least one of halogen or cyano.

2. The electrolyte according to claim 1, wherein the electrolyte satisfies at least one of the following conditions:
(1) based on a mass of the electrolyte, a mass percentage of the compound of Formula I is a%, and 0.01 ≤ a ≤ 5; or
(2) based on a mass of the electrolyte, a mass percentage of the additive B is b%, and 0.01 ≤ b ≤ 2.

3. The electrolyte according to claim 1, wherein the compound of Formula I comprises at least one of the following compounds: 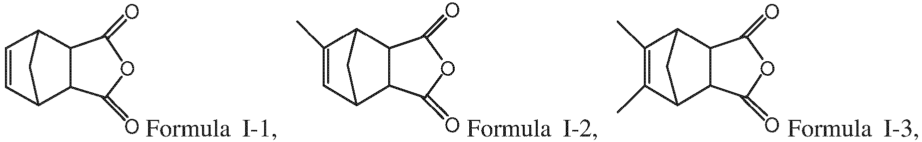 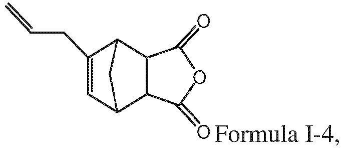 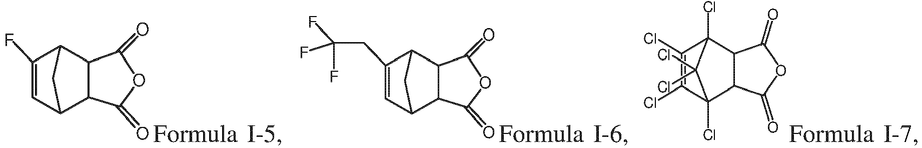 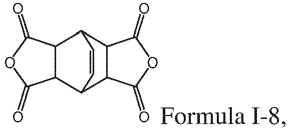 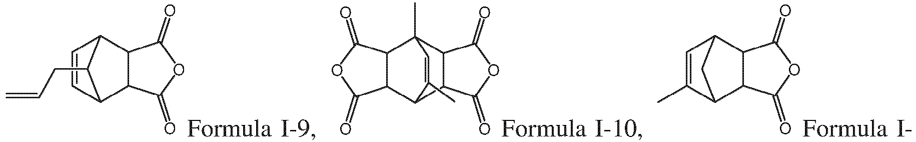 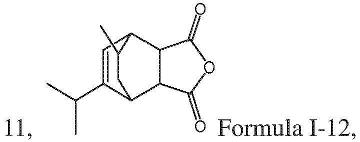 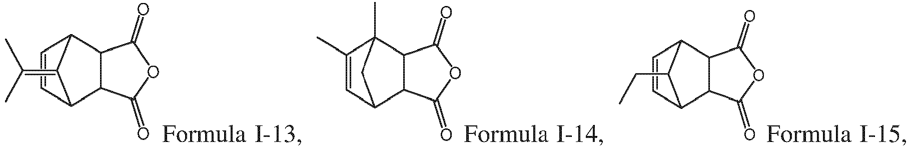 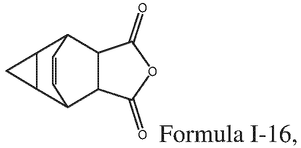 or

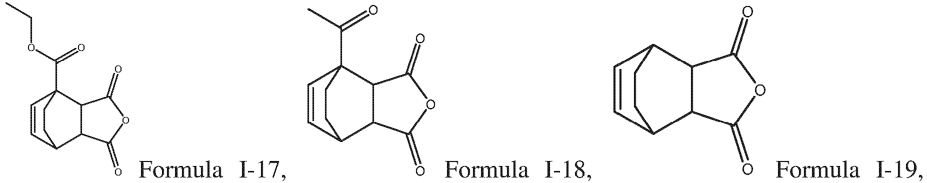

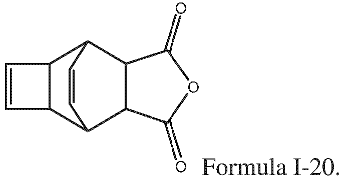

4. The electrolyte according to claim 1, wherein the electrolyte further comprises ethylene carbonate, and based on a mass of the electrolyte, a mass percentage of the ethylene carbonate is 5% to 30%.

5. The electrolyte according to claim 1, wherein the electrolyte further comprises an additive C, the additive C comprises at least one of vinylene carbonate, fluoroethylene carbonate, difluoroethylene carbonate or vinylethylene carbonate, and based on a mass of the electrolyte, a mass percentage of the additive C is c%, and 0.1 ≤ c ≤ 5.

6. The electrolyte according to claim 1, wherein the electrolyte further comprises a sulfur-oxygen double bond-containing compound, and the sulfur-oxygen double bond-containing compound comprises at least one of 1,3-propane sultone, 2,4-butane sultone, 1,4-butane sultone, 1,3,2-dioxathiolane 2,2-dioxide, prop-1-ene-1,3-sultone, 1,5,2,4-dioxadithiane 2,2,4,4-tetraoxide, divinyl sulfone, 1,3-propanedisulfonic anhydride, 1,3,2-dioxathiolane,4-methyl-,2,2-dioxide, butadiene sulfone, or 2,4,8,10-tetraoxa-3,9-dithiaspiro[5.5]undecane,3,3,9,9-tetraoxide.

7. The electrolyte according to claim 6, wherein based on a mass of the electrolyte, a mass percentage of the sulfur-oxygen double bond-containing compound is d%, and 0.1 ≤ d ≤ 5.

8. The electrolyte according to claim 1, wherein the electrolyte further comprises a polynitrile compound, and the polynitrile compound comprises at least one of adipic dinitrile, succinonitrile, ethylene glycol bis(propionitrile) ether, 1,3,6-hexanetricarbonitrile, or 1,2,3-tris(2-cyanoethoxy)propane.

9. The electrolyte according to claim 8, wherein based on a mass of the electrolyte, a mass percentage of the polynitrile compound is e%, and 0.1 ≤ e ≤ 5.

10. An electrochemical device, comprising the electrolyte according to any one of claims 1 to 9.

11. An electronic device, comprising the electrochemical device according to claim 10.
